# EUROPEAN PATENT SPECIFICATION

(11) **EP 1 579 984 B1**
(45) Date of publication and mention of the grant of the patent: **05.11.2008**
(21) Application number: 04025785.9
(22) Date of filing: 16.07.2002
(51) Int. Cl.: B29D 11/00

(54) **Method of forming a fiber waveguide**
Verfahren zur Herstellung von Faserlichtwellenleitern
Procédé pour la fabrication de guides d'ondes à fibre optique

(30) Priority: 16.07.2001 US 305839 P; 23.01.2002 US 351066 P
(43) Date of publication of application: 28.09.2005
(62) Divisional of application: 02752345.5
(73) Proprietor: Massachusetts Institute of Technology, Cambridge, MA 02139 (US)
(72) Inventor: Fink, Yoel, Brookline, MA 02142 (US); Hart, Shandon, Maplewood, MN 55119 (US); Maskaly, Gary, New Milford, PA 18834 (US); Temelkuran, Burak, Boston, MA 02115 (US)
(74) Representative: Engstrand, Maria Linnéa

(56) References cited:
- EP-A- 0 844 501
- WO-A-03/079073
- US-A- 5 935 491

## Description

### PRIORITY INFORMATION

This application claims priority from provisional application Ser. No. 60/305,839 filed July 16, 2001 and provisional application Ser. No. 60/351,066 filed January 23, 2002.

### BACKGROUND OF THE INVENTION

The invention relates to the field of optics, and in particular to me creation of reflecting dielectric mirror structures, such as fibers.

Polymer fibers have become ubiquitous in applications such as textile fabrics, due to their excellent mechanical properties and availability of low-cost, high-volume processing techniques. However, the control over their optical properties has so far remained relatively limited. Conversely, dielectric mirrors are used to precisely control and manipulate light in high performance optical applications, but fabrication of these fragile mirrors has been mostly restricted to planar geometries and remains costly.

Planar dielectric mirrors, also known as one-dimensional photonic crystals, can exhibit highly efficient reflection of electromagnetic (EM) radiation and precise frequency selectivity. Advances in vapor deposition technology have enabled a high degree of control over film layer thicknesses, resulting in an ability to control the spectral response of these mirrors to absolute accuracies of better than one angstrom. This has led to such specialized applications as gain flatteners in optical communications, add-drop channel filters in dense wavelength division multiplexing systems, laser resonator components, or simple high efficiency reflectors. Unlike metallic mirrors, which typically absorb a few percent of any incident light, dielectric mirrors can be fabricated with external reflectivities approaching 100%.

A typical dielectric mirror is a planar stack of dielectrics made of two alternating materials with different refractive indices. Although these mirrors do not possess a complete photonic band gap, it has recently been shown that they can be designed to reflect light of all incidence angles and polarizations across broad, selectable frequency ranges. This advance has inspired interest in the utilization of omnidirectional dielectric mirrors in applications requiring strong confinement or reflection of light at many angles, such as optical cavities or hollow waveguides.

The degree of utilization of all types of dielectric mirrors has been impeded by cost and complexity associated with their fabrication, which typically involves physical or chemical vapor deposition of many alternating layers in sequence, and by difficulties associated with depositing these mirrors on non-planar surfaces. In addition, the mirror films are typically fragile and not freestanding.

EP0844501 concerns a plastic optical fiber comprising a cladding, a first core disposed inside the cladding, and a second core disposed inside the first core. A ratio X of a diameter (D2) of the second core to a diameter (D1) of the first core (=D2/D1) and a ratio Y of a difference (n1 - n0) between a refractive index (n1) of the first core and a refractive index (n0) of the cladding to a difference (n2 - n0) between a refractive index of the second core (n2) and the refractive index (n0) of the cladding (=(n1 - n0)/(n2 - n0)) satisfy the following relational expressions: 0.3 <= X <= 0.95, 0.4 <= Y <= 0.95, 1 <= X + Y <= 1.9.

US5935491 discloses a method of making a gradient-index polymer rod involving the steps of: combining a polymer with an additive, wherein the refractive index of the polymer material is different than the refractive index of the additive material; extruding the polymer and the additive into a polymer rod having a substantially uniform index of refraction profile; and immersing the rod having the substantially uniform index of refraction profile in a non-solvent under conditions and for a time that enables the non-solvent to permeate the rod and out-diffuse a portion of the additive material, thereby producing the gradient-index polymer rod. The rod produced by the method can be drawn into a graded index polymer fiber. The document also features a gradient-index polymer rod (or fiber) of condensation-type polymer that is doped with an additive material. The refractive index of the additive material is different than the refractive index of the polymer and the rod (or fiber) has a concentration profile of the additive that varies along the radial direction of the rod (or fiber) from the center to the surface of the rod (or fiber).

### SUMMARY OF THE INVENTION

According to the invention, there is provided a method in accordance with claim 1.

According to one aspect which does not form part of the invention, there is provided a mirror structure. The mirror structure includes a plurality of features of a defined size. The features include alternating spatial units of a chalcogenide glass and a thermoplastic polymer, and are specifically arranged in an ordered form so that the structure is highly reflective.

According to another aspect which does not form part of the invention, there is provided a method of forming a mirror structure. The method includes forming a plurality of features of a defined size. The features include alternating spatial units of a chalcogenide glass and a thermoplastic polymer. The method further includes specifically arranging the features in an ordered form so that the structure is highly reflective.

According to another aspect which does not form part of the invention, there is provided a mirror structure, The mirror structure includes a plurality of features of a defined size. The features includes multiple spatial units of a chalcogenide glass and a thermoplastic polymer. Also, the spatial units are of size 1 nanometer and 20000 nanometers.

According to another aspect which does not form part of the invention, there is provided a method of forming a mirror structure. The method includes forming a plurality of features of a defined size. A plurality of spatial units of a chalcogenide glass and a thermoplastic polymer are formed on each of said features. Also, the spatial units are of size between 1 nanometer and 20000 nanometers. According to yet another aspect which does not form part of the invention, there is provided a mirror structure. The mirror structure includes a plurality of layers of a thermoplastic polymer of a defined size, and a plurality of layers of chalcogenide glass of a defined size. The layers of thermoplastic polymer and chalcogenide glass are arranged in an ordered form so that the structure is highly reflective.

In yet another aspect of which does not form part the invention, there is provided a method of forming a mirror structure. The method includes forming a plurality of layers of a polymer plastic of a defined size, and a plurality of layers of chalcogenide glass of a defined size. The layers of thermoplastic polymer and chalcogenide glass are arranged in an ordered form. At some point in the forming process, the thermoplastic polymer and chalcogenide glass are thermally co-processed simultaneously in order to form the mirror structure. In one representation, the layers of thermoplastic polymer and chalcogenide glass are rolled or stacked, and at a specific temperature the layers of polymer plastic and chalcogenide glass are thermally drawn together or bonded so that the resulting structure is highly reflective.

### BRIEF DESCRIPTION OF THE DRAWINGS

FIG. 1 is a photograph of a 200 µm OD fibers that are formed using selected materials in accordance with the invention;
FIG. 2 is a photonic band diagram for a one-dimensional photonic crystal having a periodic refractive index alternating between 2.8 and 1.55;
FIGs. 3A-3B are graphs of measured reflectance spectra for a 400 µm OD and 200 µm OD dielectric fiber, respectively, relative to gold-coated fibers of the same diameter;
FIGs. 4A-4C are SEM micrographs of a 400 µm OD fiber cross-section.
FIG. 5 is a cross-section micrograph of a film used to form a chiral waveguide; and
FIG. 6 is a micrograph of a PES-As₂Se₃ drawn fiber.

### DETAILED DESCRIPTION OF THE INVENTION

The invention combines some of the advantages of two dissimilar materials in the fabrication of polymeric fibers having on or within them a multilayer dielectric mirror structure. Thermal processing techniques are used to create and then reduce a macroscopic layered dielectric structure to sub-micron length scales, thus establishing a photonic band gap in the mid-IR range. The selection of materials involves the empirical identification of a pair of amorphous materials, such as poly(ethersulfone)(PES) and arsenic triselenide (As₂Se₃), which have substantially different refractive indices yet have similar thermo-mechanical properties within a certain thermal processing window. Amorphous materials, such as inorganic glasses and some thermoplastic polymers, have gradual variation in viscosity with temperature when compared to crystalline materials. This is due to the lack of a first-order-thermodynamic transition in an amorphous material as it is cooled from a melt to the glassy state. The absence of a first-order transition implies a corresponding continuous variation in free volume and configuration entropy, which are controlling factors in viscosity; thus the viscosity does not vary abruptly with changing temperature. This continuous viscosity variation is one of the most important factors that allows inorganic glasses and organic thermoplastics to be formed by high-speed thermal processes; such as drawing, blowing, pressing, and extrusion.

There are serious difficulties in property matching that must be considered in order to utilize similar viscous thermal processes in the fabrication of omnidirectional mirror structures. The selected materials should have low optical absorption over a wide, common wavelength band. They should have very similar or controllable viscosities at the processing temperatures of interest so that the layers precisely maintain the desired relative thicknesses ratio. In addition, the layers must adhere strongly and must not delaminate, even when subjected to thermal quenching.

One of the advantages of using As₂Se₃ is that not only is it a stable glass, but it is also a stoichiometric compound that can be readily deposited in thin films through thermal evaporation or sputtering without dissociation. Additionally, As₂Se₃ is transparent to IR radiation from approximately 0.8 to 17 µm, and has refractive index of approximately 2.8 in the mid-IR range. PES is a high performance, dimensionally stable thermoplastic with a refractive index of 1.55 and good transparency to EM waves in a range extending from the visible regime into the mid-IR. It can be expected that the property matching described hereinbefore can be further optimized through selective adjustment of polymer and glass compositions. Other materials combinations involving various chalcogenides, oxides, halides, or polymers could be potentially used to achieve similar results.

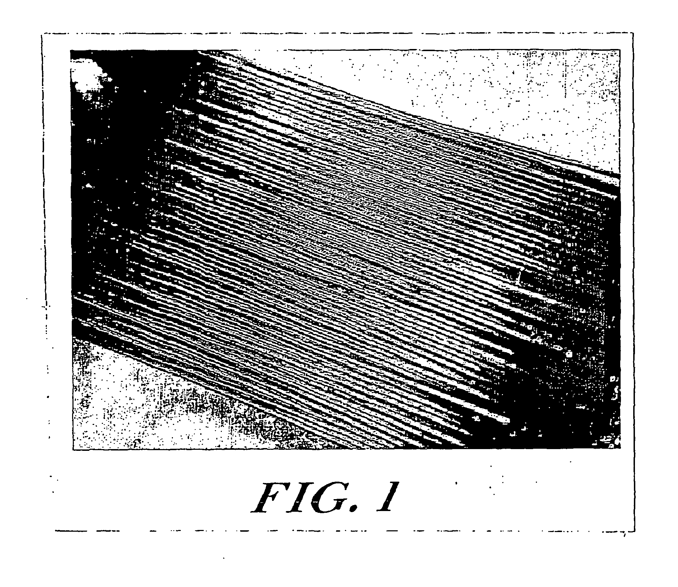

FIG. 1 is a photograph of fibers that are formed using the selected materials in accordance with the invention. In this embodiment, the selected materials are used to construct a multilayer preform rod, which essentially is a macro-scale version of the final fiber. In order to fabricate the dielectric mirror fiber preform, an As₂Se₃ film is deposited through thermal evaporation on either side of a freestanding PES film. The PES film has a thickness between 0.1 - 10,000 µm. This large film is then rolled by hand onto the exterior of a 25 cm long hollow PES rod with an outer diameter (OD) of 2 cm in order to create a structure having approximately 20 alternating layers of PES and As₂Se₃. In this way, a periodic dielectric structure with 20 or more layers is fabricated, yet only one vapor deposition step is strictly required. The layers of PES and As₂Se₃ form features of the same size and dimensions. These features are specifically arranged in an ordered form. The dielectric structure is consolidated into a solid preform through heating in a vacuum oven at a low pressure and an elevated temperature.

In particular, the dielectric structure has a certain order or design that the materials form features in a regular, controlled fashion. The features can consist of spatial units of a chalcogenide glass and a thermoplastic polymer, and can have an engineered structure with periodic, pseudo-periodicity, or there can be no strict periodicity, but the features are nevertheless purposefully arranged. The essential point is that the feature arrangement of the materials in the final structure is not random or probabilistic, but is engineered or designed using techniques described hereinafter. The spatial units can have dimensional sizes between 1 - 20000 nanometers.

The resulting multilayer fiber preform is subsequently thermomechanically drawn down using an optical fiber draw tower into hundreds of meters of multilayer fiber with sub-micron layer thickness, thus establishing a photonic bandgap in the mid-IR range. Fibers of varying outer diameters from 175-500 µm with a typical standard deviation of 10 µm from target are drawn from the same preform to demonstrate adjustment of the reflectivity spectra through thermal deformation. The spectral position of the photonic band gap is precisely controlled by the optical monitoring of the outer diameter (OD) of the fiber during draw, which is later verified by reflectivity measurements on single and multiple fibers of different diameters. Using multiple preforms, various fibers can also be drawn having the same diameter, but completely different spectral signatures. The resulting dielectric mirror fibers exhibit reflectivity at selectable IR wavelength ranges that matches or exceeds the reflectivity of gold-coated fibers.

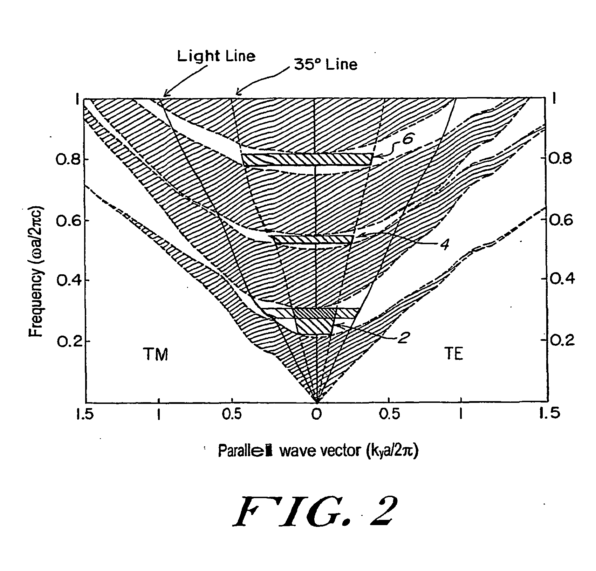

FIG. 2 is a photonic band diagram for a one-dimensional photonic crystal having a periodic refractive index alternating between 2.8 and 1.55. In theory, predicting the spectral response of these fibers, it is convenient to calculate the photonic band structure that corresponds to an infinite one-dimensional photonic crystal. This allows for the analysis of propagating and evanescent modes in the structure, corresponding to real and imaginary Bloch wave number solutions. The electric field vector is parallel to the mirror layer interfaces for the transverse electric (TE) polarized modes, and likewise the magnetic field vector is parallel to the interfaces for the transverse magnetic (TM) modes. The parallel wave vector (*k_{y}*) is the vector component of the incident EM wave that is parallel to the layer interfaces. The phase space accessible from an external ambient medium is contained between the light lines that are defined by the glancing-angle condition ω=*ckᵣ*/*n*₀, and the modes between the 35° lines correspond to those sampled experimentally. Axes are normalized to the thickness α of one bilayer with a period consisting one high and one low index layer.

FIG. 2 depicts the photonic band diagram for an infinite structure having similar periodicity and refractive indices to the mirror structures fabricated herein. Three photonic band gaps 2, 4, and 6 are present where high reflectivity is expected within the 0-35° angular ranges, and the fundamental gap contains a range of external omnidirectional reflectivity. The gray regions represent propagating modes within the structure, while the white regions represent evanescent modes. The lower dark shaded trapezoid represents a region of external omnidirectional reflection.

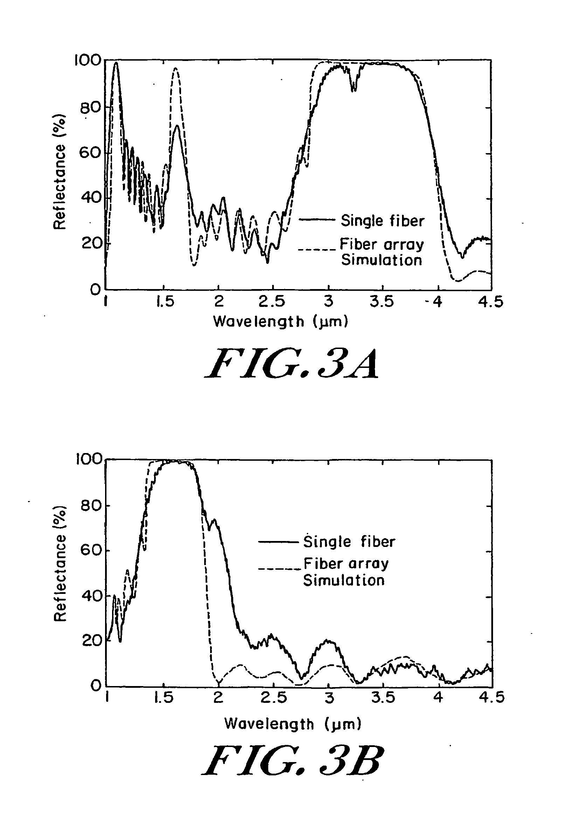

FIGs. 3A-3B are graphs of measured reflectance spectra for a 400 µm OD and a 200 µm OD dielectric fiber, respectively, relative to gold-coated fibers of the same diameter. The mirror fiber reflectivity is measured from single fibers and parallel fiber arrays using a Nicolet/SpectraTec NicPlan Infrared Microscope and Fourier Transform Infrared Spectrometer (Magna 860). The microscope objective is used to focus on the fibers and has a numerical aperture (NA) of 0.58. This results in a detected cone where the angle of reflection with respect to the surface normal of the structure can vary from normal incidence to approximately 35°, which is determined by the NA of the microscope objective.

The fibers that are drawn to the 400 µm OD exhibit a very strong reflection band centered at a wavelength of 3.5 µm, as shown in FIG. 3A. Measured reflectivity spectra agree well with the transfer matrix method (TMM) simulations where the reflectivity is averaged across the aforementioned angular range including both polarization modes.

The fibers that are drawn to the 200 µm OD show a similar strong fundamental reflection band centered near 1.7 µm, as shown in FIG. 3B. This shifting of the primary photonic band gap clearly illustrates the precise engineering of the reflectivity spectra over a wide frequency range through thermal deformation processing. Strong optical signatures are measurable from single fibers at least as small as 200 µm OD. Fiber array measurements, simultaneously sampling reflected light from multiple fibers, agree with the single fiber results shown in FIG. 3B.

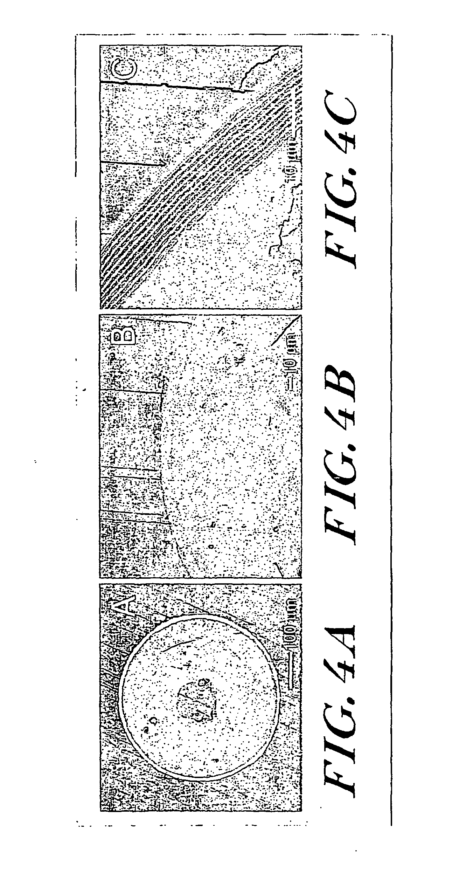

These reflectivity results are strongly indicative of uniform layer thickness control, good interlayer adhesion, and low interdiffusion through multiple thermal treatments. This is confirmed by scanning microscope (SEM) inspections of fiber cross-sections, as shown in FIG. 4, to be discussed hereinafter. In this embodiment, the thickness a for the 400 µm OD fiber is 0.45, and the thickness α for the 200 µm OD fiber is 0.45 µm. The layer thickenesses that are observed correspond well to the measured reflectivity spectra. The fibers have a hole in the center, due to the choice of hollow rod as the preform substrate. The fiber mirror layers have experienced uniform deformation during draw. The rolled-up mirror structure includes a double outer layer of PES for mechanical protection, creating a noticeable absorption peak in the reflectivity spectrum at approximately 3.2 µm., as shown in FIG. 3A.

FIGs. 4A-4C are SEM micrographs of a 400 µm OD fiber cross-section. The entire fiber is embedded in epoxy. FIG. 4A shows the entire fiber cross-section, with a mirror structure surrounding the PES core. FIG. 4B demonstrates that the majority of the fiber exterior is free of significant defects and that the minor structure adheres well to the fiber substrates. FIG. 4C reveals the ordering and adhesion within the alternating layers of As₂Se₃ (bright layers) and PES (dark layers). Stresses that are developed during the sectioning cause some cracks in the mounting epoxy that are deflected at the fiber interface, further demonstrating the mechanical robustness of these mirror-fibers. Fibers from this batch are used in the reflectivity measurements in FIG. 3A.

The combination of the spectral and direct imaging data demonstrates excellent agreement with the photonic band diagram of FIG. 2. This is summarized by comparing the photonic band gap location for the 400 µm OD fibers as shown in FIG. 2, together with the SEM-measured layer spacing of α = 0.90 µm, to the empirical spectral reflection data shown in FIG. 3A. The measured gap width range to midrange ratio of the fundamental gap for the 400 µm OD fiber is 27%, compared to 29% in the photonic band diagram.

The matching of rheological behavior in elongation at the draw temperature is a factor to the invention. At the draw temperature, the materials should be fluid enough to elongate without significant stress buildup, yet not so fluid that the minor layers lose their ordered structure. Thermal expansion coefficient (CTE) plays a role in the adhesion and integrity of thin films during any thermal quenching procedure. PES has a linear CTE of 55x10⁻⁶/°C, while As₂Se₃ has a linear CTE of 25x10⁻⁶/°C. In the mirror-fiber geometry described herein, this CTE mismatch actually has the effect of strengthening the outer As₂Se₃ layers by placing them in compression as the PES layers comprising the bulk of the fiber cools and contracts well below the glass transition of As₂Se₃, much like glaze on a typical coated ceramic body is toughened upon cooling from high temperature sintering.

The type of materials and process described hereinbefore can also be applicable for reducing the cost of planar dielectric mirrors, as well as, creating a wide variety of new conformal minor geometries using various high-throughput processing techniques. These fibers can lead to many new photonic crystal applications involving flexible, woven structures with high reflectivity and a distinct spectral fingerprint.

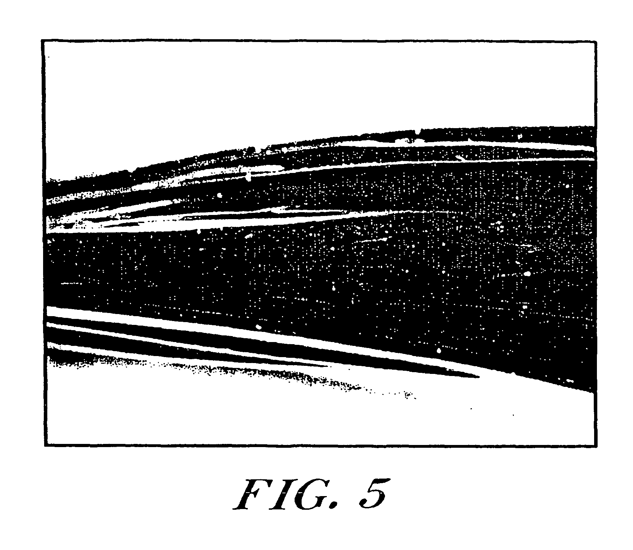

FIG. 5 is cross-section schematic of a film used to form a all-dielectric chiral waveguide. In this embodiment, a chiral waveguide structure must not be identical by any rotation except a full 360°. If the plane perpendicular to the fiber is not reproducible by a 180° rotation, then the fiber will have a distinct handedness.

This aspect which does not form part of the invention describes a fiber with variations in its cross-section. One simple way to induce variations in the cross-section of the fiber is by using a rolling methodology, as discussed hereinbefore. If flexible materials are used, they can be rolled and then drawn. Two identically drawn fibers being rolled in opposite directions will be mirror images of one another and therefore have chirality.

For this rolled and drawn structure to be a waveguide, electromagnetic radiation must be confined within the structure. Several methods can be used to create guided modes within the fiber. The invention provides the ability of a chiral device having a large refractive index contrast between two dielectric materials in a controlled layer structure. Such an omnidirectional reflector has been described in US Patent No. 6,130, 780. This design can be tuned to any wavelength, thus creating a low loss waveguide. The same cannot be said of a metallic surface, because they strongly absorb in the infrared. For such an omnidirectional reflector to be rolled and drawn, many properties between materials must be compatible.

The chiral waveguide is formed using the same techniques discussed hereinbefore regarding the fibers. In particular, the chiral waveguide uses a chalcogenide glass, such as As₂Se₃, and polymers, such as PES or polyetherimide (PEI). The properties of the As₂Se₃ can be tuned by the altering the As-Se ratio, as well as, by doping with various elements including but not limited to germanium, tellurium, and sulfur. Doping affects all the properties of As₂Se₃, and can therefore be used to fine tune its compatibility with low refractive index materials. The optical properties of As₂Se₃ give a broad range over which an omnidirectional reflector can be created. Variations of the molecular weight of PES and PEI can result in the tuning of the properties of these materials as well. Other polymers in the same family and other thermoplastics are also strong candidates for use in these fibers.

Films of PEI or PES are obtained and As₂Se₃ is deposited on one side. The resulting films are then heated and drawn. The drawn films maintain coherency, as no cracks are evident in the thin As₂Se₃ film, as shown in FIG. 5. In particular, FIG. 5 shows one of the drawn films demonstrating its thermomechanical compatibility. The refractive index of PES is listed as 1.65, by Goodfellow Corporation. PEI is expected to have a similar refractive index.

As₂Se₃ can be deposited by methods including, but not limited to, thermal evaporation, chemical vapor deposition, and spattering. The PES and PEI can be made into thin freestanding films, dipcoated, and spincoated. The large variety of processing techniques allows various devices to be made out of these materials. For example, an evaporation/dipcoating technique can be used to create a non-chiral omnidirectionally reflective fiber waveguide. An evaporation/spincoating technique can be used to create an one-dimensional omnidirectionally reflective stacks, which can then be heated and molded into shapes and tuned to various frequencies post-production. A two-dimensional photonic crystal fiber preform can be fabricated and drawn down.

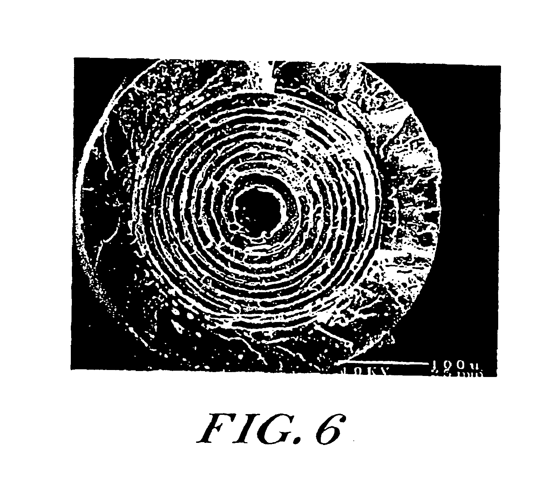

FIG. 6 is a micrograph of a PES-As₂Se₃ drawn fiber. A rolling methodology is used for forming a preform that includes the step of production or acquisition of a thin film polymer, such as PES or PEI and the subsequent deposition on the thin film polymer of a high refractive index material, such as As₂Se₃ or other chalcogenide glass. The film is rolled into a preform structure. The preform is then consolidated. The consolidated preform is heated and drawn to produce fibers, as shown in FIG. 6. The aforementioned steps may not all be necessary depending on the materials system that is selected, but they are listed as a general approach to producing rolled fibers.

An example of these steps is given by a system made from PES and As₂Se₃, as shown in FIG. 6. It is important to note that is an exemplary embodiment, and other embodiments can use different material compositions. The freestanding polymer film of PES, with a thickness of 25 µm, is obtained and coated via thermal evaporation with a 2 µm film of As₂Se₃ on both sides. The thicknesses can be varied and coating can be applied on one or both sides. Also, it is conceivable that more than two materials can be used. The film is then rolled tightly and then held together with a wrapping of Teflon tape. Many methods exist for rolling films and this is just one example of such a technique. Many other methods can be used to a rolled photonic crystal fiber.

After rolling, the preform is condensed to remove air trapped in the interfaces between the adjacent layers. To do this, the preform is heated in a vacuum oven at approximately 250°C for approximately 18 minutes. The vacuum oven is then repressurized while still hot and the preform is removed and cooled in a freezer. There are other ways to conduct this process including using a conventional oven or other cooling techniques.

After consolidation, the capillary tube is etched out with hydrofluoric acid leaving a freestanding multilayer rolled preform. The etch is conducted for approximately 1 hour. The preform is then drawn down about 5 times at approximately 250°C to yield a chiral photonic crystal fiber. Cross sectional samples are cut and coated for examination with a scanning microscope.

FIG. 6 shows a micrograph of a cross-section of the drawn fiber. It is clear that the cross-section is reproducible by any rotation other than a multiple of 360°, so any axial variation in the fiber will result in a chiral structure.

An alternative method for producing a chiral waveguide would be with a sequential thin film deposition. A pair of thermomechanically compatible materials can be both deposited via thin film processing techniques. Here a mask can be used to expose a small portion of a cylindrical substrate. The first materials can be deposited and, without the rotation of the mask, the second materials can be deposited. The substrate can then be rotated and the process repeated. The final structure will appear identical to a rolled preform.

A simple rolled or a drawn waveguide without variations in the axial direction can also provide some benefits. While the structure is not chiral, this method provides an easy and cost effective technique for producing low loss optical fibers. If the core size of the fiber is large relative to the wavelength of light, it is possible that the rolled structure will have no affect on the light beyond that of a perfectly cylindrical photonic crystal fiber. For small core fibers, novel effects are possible due to the lack of infinite rotational symmetry in the fiber cross-section. Due to the loss of this symmetry, angular momentum will no longer be conserved resulting in novel mode structures within the fiber.

Although the present invention has been shown and described with respect to several preferred embodiments thereof, various changes, omissions and additionals to the form and detail thereof, may be therein, without departing from the scope of the invention.

In another aspect which does not form part of the invention there is provided the following: a mirror structure comprising a plurality of features a defined size, said features including multiple spatial units of a chalcogenide glass and a thermoplastic polymer, that are specifically arranged in an ordered form so that said srtucture is highly reflective.

The mirror structure of above, wherein said features are arranged in a periodic form.

The mirror structure of above, wherein said ordered form is engineered or designed.

The mirror structure of above, wherein said features are arranged in a pseudoperiodic fashion.

The mirror structure of above, wherein said chalcogenide glass is comprised of arsenic triselenide.

The mirror structure of above, wherein said thermoplastic polymer is comprised of PES.

The mirror structure of above, wherein said features are comprised of alternating layers of chalcogenide glass and thermoplastic polymer.

The mirror structure of the paragraph above, wherein the polymer is first present as a polymer film precursor.

The mirror structure of the paragraph above, wherein said alternating layers of chalcogenide glass are formed by depositing a layer of chalcogenide glass on said polymer film.

The mirror structure of the paragraph above, wherein said alternating layers of chalcogenide glass and thermoplastic polymer are formed by rolling or stacking the chalcogenide-coated polymer film into a multilayer structure.

The mirror structure of the paragraph above, wherein said alternating layers of chalcogenide glass are formed or bonded into a multilayer structure using thermally-assited processes.

The mirror structure of the paragraph above, wherein said alternating layers of chalcogenide glass are reduced in size through drawing.

The mirror structure of the paragraph above, wherein said alternating layers of chalcogenide glass are formed by placing said multilayer structure in a draw tower at a specified temperature and drawing into said structure having smaller resulting dimensions.

The mirror structure of above, wherein said features are comprised of alternating layers of chalcogenide glass and thermoplastic polymer and wherein said alternating layers of chalcogenide glass are formed by placing said multilayer structure in a draw tower and drawing into said structure.

The mirror structure of above, wherein said features are formed or bonded into a multilayer structure using thermally-assisted processes.

In yet another aspect which does not form part of the invention there is provided the following:
An ordered structure comprising a plurality of features of a defined size, said features including multiple spatial units of a chalcogenide glass and a thermoplastic polymer, wherein said spatial units are of size between 1 nanometer and 20000 nanometers.

The ordered structure of above, wherein said features are comprised of alternating layers of chalcogenide glass and thermoplastic polymer.

The ordered structure of the paragraph above, wherein the polymer is first present as a polymer film precursor.

The ordered structure of the paragraph above, wherein said alternating layers of chalcogenide glass are formed by depositing a layer of chalcogenide glass on said polymer film.

The ordered structure of the paragraph above, wherein said alternating layers of chalcogenide glass and thermoplastic polymer are formed by rolling or stacking the chalcogenide-coated polymer film into a multilayer structure.

The ordered structure of the paragraph above, wherein said alternating layers of chalcogenide glass are formed or bonded into a multilayer structure using thermally-assisted processes.

The ordered structure of the paragraph above, wherein said alternating layers of chalcogenide glass are reduced in size through drawing.

The ordered structure of the paragraph above, wherein said alternating layers of chalcogenide glass are formed by placing said multilayer structure in a draw tower at a specified temperature and drawing into said structure having smaller resulting dimensions.

The ordered structure of above, wherein said features are comprised of alternating layers of chalcogenide glass and thermoplastic polymer, wherein said alternating layers of chalcogenide glass are formed by placing said multilayer structure in a draw tower and drawing into said structure.

The ordered structure of above, wherein said features are formed or bonded into a multilayer structure using thermally-assisted processes.

In yet another aspect which does not form part of the invention there is provided the following:
A method of forming a mirror structure, said method comprising:
forming a plurality of features of a defined size, said features including multiple spatial units of a chalcogenide glass and a thermoplastic polymer; and
specifically arranging said features in an ordered form so that said structure is highly reflective.

The method of above, wherein said features are arranged in a periodic form.

The method of above, wherein said ordered form is engineered or designed.

The method of above, wherein said features are arranged in a pseudo-periodic fashion.

The method of above, wherein said chalcogenide glass is comprised of arsenic triselenide.

The method of above, wherein said thermoplastic is comprised of PES.

The method of above, wherein said features is comprised of alternating layers of chalcogenide glass and thermoplastic polymer.

The method of the paragraph above, wherein the polymer is first present as a polymer film precursor.

The method of the paragraph above, wherein said alternating layers of chalcogenide glass are formed by depositing a layer of chalcogenide glass on said polymer film.

The method of the paragraph above, wherein said alternating layers of chalcogenide glass and thermoplastic polymer are formed by rolling or stacking the chalcogenide-coated polymer film into a multilayer structure.

The method of the paragraph above, wherein said alternating layers of chalcogenide glass are formed or bonded into a multilayer structure using thermally-assisted processes.

The method of the paragraph above, wherein said alternating layers of chalcogenide glass are reduced in size through drawing.

The method of the paragraph above, wherein said alternating layers of chalcogenide glass are formed by placing said multilayer structure in a draw tower at a specified temperature and drawing into said structure having smaller resulting dimensions.

The method of above, wherein said features is comprised of alternating layers of chalcogenide glass and thermoplastic polymer, and wherein said alternating layers of chalcogenide glass are formed by placing said multilayer structure in a draw tower and drawing into said structure.

The method of above, wherein said features are formed or bonded into a multilayer structure using thermally-assisted processes.

In yet another aspect which does not form part of the invention there is provided the following: A method of forming an ordered structure, said method comprising:
forming a plurality of features of a defined size: and
forming a plurality of spatial units of a chalcogenide glass and a thermoplastic polymer on each of said features; wherein said spatial units are of size between 1 nanometer and 20000 nanometers.

The method of above, wherein said features is comprised of alternating layers of chalcogenide glass and thermoplastic polymer.

The method of the paragraph above, wherein said polymer is first present as a polymer film precursor.

The method of the paragraph above, wherein said alternating layers of chalcogenide glass are formed by depositing a payer of chalcogenide glass on said polymer film.

The method of the paragraph above, said alternating layers of chalcogenide glass are formed by rolling or stacking the chalcogenide-coated polymer film into a multilayer structure.

The method of the paragraph above, said alternating layers of chalcogenide glass are formed or bonded into a multilayer structure using thermally-assisted processes.

The method of the paragraph above, said alternating layers of chalcogenide glass are formed by placing said multilayer structure in a draw tower at a specified temperature and drawing into said structure having smaller resulting dimensions.

The method of above, wherein said features are formed or bonded into a multilayer structure using thermally-assisted processes.

In yet another aspect which does not form part of the invention there is provided the following: A mirror structure comprising a plurality of layers of a thermoplastic polymer of a defined size, and a plurality of layers of chalcogenide glass of a defined size; wherein said layers of thermoplastic polymer and chalcogenide glass are arranged in an ordered form so that said structure is highly reflective.

The mirror structure of above, wherein said ordered form is engineered or designed.

The mirror structure of above, wherein said chalcogenide glass is comprised of arsenic triselenide.

The mirror structure of above, wherein said thermoplastic polymer is comprised of PES.

The mirror structure of above, wherein said layers of chalcogenide glass are formed by depositing layers of chalcogenide glass on polymer films.

The mirror structure of the paragraph above, wherein said layers of chalcogenide glass and thermoplastic polymer are formed into a multilayer strycture after being rolled or stacked.

The mirror structure of the paragraph above, said multilayer structure is bonded or consolidated by heating.

The mirror structure of the paragraph above, said multilayer structure is placed in a draw tower at a specified temperature and drawn into said structure with reduced feature sizes.

In yet another aspect which does not form part of the invention there is provided the following: A method of forming a mirror structure, said method comprising:
forming a plurality of layers of a thermoplastic polymer of a defined size;
forming a plurality of layers of chalcogenide glass of a defined size; and
arranging said layers of thermoplastic polymer and chalcogenide glass in an ordered form;
rolling or stacking said layers of thermoplastic polymer and chalcogenide glass; and
drawing said layers of thermoplastic polymer and chalcogenide glass at a specified temperature so that said structure is highly reflective.

The method of above, wherein said chalcogenide glass is comprised of arsenic triselenide.

The method of above, wherein said thermoplastic polymer is comprised of PES.

The method of above, wherein said layers of chalcogenide glass are formed by depositing layers of chalcogenide glass on polymer films.

The method of the paragraph above, wherein said layers of chalcogenide glass and thermoplastic polymer are formed into a multilayer structure after being rolled or stacked.

The method of the paragraph above, said multilayer structure is formed or bonded through thermally-assisted processes.

The method of the paragraph above, said multilayer structure is placed in a draw tower at a specified temperature and drawn into said structure having reduced feature dimensions.

The method of above, wherein said features are formed or bonded into a multilayer structure using thermally-assisted processes.

In yet another aspect which does not form part of the invention there is provided the following: A fibre comprising a plurality of features of a defined size, said features including:
multiple spatial units that are specifically arranged in an ordered form so that said fiber exhibits high external reflectivity.

The fiber of above, wherein said features are arranged in a periodic form.

The fiber of above, wherein said ordered form is engineered or designed.

The fiber of above, wherein said features are arranged in a pseudo-periodic fashion.

The fiber of above, wherein said features are formed of bonded into a multilayer structure using thermally-assisted processes.

The fiber of above, wherein said features are comprised of multiple spatial units of a chalcogenide glass and a thermoplastic polymer.

A mirror structure includes a plurality of features of a defined size. The features include alternating spatial units of a chalcogenide glass and a thermoplastic polymer, and are specifically arranged in an ordered form so that the structure is highly reflective. Thermally-assisted methods are introduced for forming such structures.

## Claims

1. A method for forming a fiber waveguide, comprising:
rolling a multilayer film into a preform structure;
deriving a consolidated perform from the perform structure, and
forming the fiber waveguide, wherein the forming comprises drawing the consolidated preform.

2. A method according to claim 1, wherein the multilayer film comprises a polymer film.

3. A method according to claim 2, wherein the polymer is a thermoplastic polymer.

4. A method according to claim 3, wherein the polymer comprises poly(ethersulfone).

5. A method according to claim 3, wherein the polymer comprises polyetherimide.

6. A method according to any one of the preceding claims, wherein the multilayer film is rolled around a hollow rod.

7. A method according to claim 6, wherein deriving the consolidated perform from the perform structure comprises etching the hollow rod.

8. A method according to any one of the claims 1 to 7, wherein the multilayer film is formed by depositing a chalcogenide glass onto a polymer film.

9. A method according to claim 8, wherein the chalcogenide glass is deposited onto one side of the polymer film.

10. A method according to claim 8, wherein the chalcogenide glass is deposited onto both sides of the polymer film.

11. A method according to any one of the claims 8 to 14, wherein the chalcogenide glass is deposited by thermal evaporation, chemical vapour deposition, or sputtering.

12. A method according to any one of the claims 1 to 11, wherein the consolidated perform is thermomechanically drawn.

13. A method according to claim 12, wherein the consolidated perform is drawn using an optical fiber draw tower.

14. A method according to any one of the preceding claims, wherein deriving the consolidated perform from the perform structure comprises heating the perform structure.

15. A method according to any one of the preceding claims, wherein deriving the consolidated perform from the perform structure comprises heating the perform structure at a low pressure.

16. A method according to any one of the preceding claims, wherein deriving the consolidated perform from the perform structure comprises heating the perform using a vacuum oven.

## Patentansprüche

1. Verfahren zur Herstellung eines Faser-Lichtwellenleiters, umfassend:
das Auswalzen eines mehrlagigen Films zu einer Vorformstruktur;
das Bilden einer konsolidierten Vorform aus der Vorformstruktur; und
das Bilden eines Faser-Lichtwellenleiters, wobei die Bildung das Ziehen der konsolidierten Vorform umfasst.

2. Verfahren nach Anspruch 1, wobei der mehrlagige Film einen Polymerfilm umfasst.

3. Verfahren nach Anspruch 2, wobei es sich beim Polymeren um ein thermoplastisches Polymeres handelt.

4. Verfahren nach Anspruch 3, wobei das Polymere Poly-(ethersulfon) umfasst.

5. Verfahren nach Anspruch 3, wobei das Polymere Polyetherimid umfasst.

6. Verfahren nach einem der vorstehenden Ansprüche, wobei der mehrlagige Film um einen Hohlstab gewalzt wird.

7. Verfahren nach Anspruch 6, wobei das Bilden der konsolidierten Vorform aus der Vorformstruktur das Ätzen des Hohlstabs umfasst.

8. Verfahren nach einem der Ansprüche 1 bis 7, wobei der mehrlagige Film durch Abscheiden eines Chalkogenid-Glases auf einem Polymerfilm gebildet wird.

9. Verfahren nach Anspruch 8, wobei das Chalkogenid-Glas auf einer Seite des Polymerfilms abgeschieden wird.

10. Verfahren nach Anspruch 8, wobei das Chalkogenid-Glas auf beiden Seiten des Polymerfilms abgeschieden wird.

11. Verfahren nach einem der Ansprüche 8 bis 10, wobei das Chalkogenid-Glas durch thermische Verdampfung, chemische Dampfabscheidung oder Sputtering abgeschieden wird.

12. Verfahren nach einem der Ansprüche 1 bis 11, wobei die konsolidierte Vorform thermomechanisch gezogen wird.

13. Verfahren nach Anspruch 12, wobei die konsolidierte Vorform unter Verwendung eines Turms zum ziehen von optischen Fasern gezogen wird.

14. Verfahren nach einem der vorstehenden Ansprüche, wobei das Bilden der konsolidierten Vorform aus der Vorformstruktur das Erwärmen der Vorformstruktur umfasst.

15. Verfahren nach einem der vorstehenden Ansprüche, wobei das Bilden der konsolidierten Vorform aus der Vorformstruktur das Erwärmen der Vorformstruktur bei einem niederen Druck umfasst.

16. Verfahren nach einem der vorstehenden Ansprüche, wobei das Bilden der konsolidierten Vorform aus der Vorformstruktur das Erwärmen der Vorformstruktur unter Verwendung eines Vakuumofens umfasst.

## Revendications

1. Procédé de formage d'un guide d'ondes de fibre, comprenant :
l'enroulement d'un film multicouche en une structure préformée ;
l'établissement d'une préforme consolidée à partir de la structure préformée, et
la formation d'un guide d'ondes de fibre, dans lequel la formation comprend l'étirage de la préforme consolidée.

2. Procédé selon la revendication 1, dans lequel le film multicouche comprend un film en polymère,

3. Procédé selon la revendication 2, dans lequel le polymère est une polymère thermoplastique.

4. Procédé selon la revendication 3, dans lequel le polymère comprend du poly(éthersulfone).

5. Procédé selon la revendication 3, dans lequel le polymère comprend du polyétherimide.

6. Procédé selon l'une quelconque des revendications précédentes, dans lequel le film multicouche est enroulé autour d'une tige creuse.

7. Procédé selon la revendication 6, dans lequel le fait d'établir la préforme consolidée de la structure de préforme comprend le fait d'attaquer chimiquement la tige creuse.

8. Procédé selon l'une quelconque des revendications 1 à 7, dans lequel le film multicouche est formé en déposant du verre de chalcogénure sur le film polymère.

9. Procédé selon la revendication 8, dans lequel le verre de chalcogénure est déposé sur un côté du film polymère.

10. Procédé selon la revendication 8, dans lequel le verre de chalcogénure est déposé sur les deux côtés du film polymère.

11. procédé selon l'une quelconque des revendications 8 à 10, dans lequel le verre de chalcogénure est déposé par évaporation thermique, par dépôt de vapeur chimique, ou par pulvérisation.

12. Procédé selon l'une quelconque des revendications 1 à 11, dans lequel la préforme consolidée est étirée thermomécaniquement.

13. Procédé selon la revendication 12, dans lequel la préforme consolidée est étirée en utilisant une tour d'étirage de fibre optique.

14. Procédé selon l'une quelconque des revendications précédentes, dans lequel l'établissement de la préforme consolidée à partir de la structure de préforme comprend le fait de chauffer la structure de préforme.

15. Procédé selon l'une quelconque des revendications précédentes, dans lequel l'établissement de la préforme consolidée à partir de la structure préformée comprend le fait de chauffer la structure préformée à basse pression.

16. Procédé selon l'une quelconque des revendications précédentes, dans lequel l'établissement de la préforme consolidée à partir de la structure préformée comprend le fait de chauffer la préforme en utilisant un four à vide.
